# EUROPÄISCHE PATENTANMELDUNG

(11) **EP 1 207 071 A2**
(43) Veröffentlichungstag der Anmeldung: **22.05.2002**
(21) Anmeldenummer: 01126530.3
(22) Anmeldetag: 14.11.2001
(51) Int. Cl.: B60K 17/04

(54) **Portalachse**

(30) Priorität: 17.11.2000 DE 10057090
(71) Anmelder: ZF FRIEDRICHSHAFEN Aktiengesellschaft, 88038 Friedrichshafen (DE)
(72) Erfinder: Grünbeck, Wolfgang, 94209 Regen (DE)

(57) **Zusammenfassung**

Die Portalachse für Kraftfahrzeuge und insbesondere Omnibusse weist zwei Portalgehäuse auf, sowie ein Kegelradgetriebe inklusive Differenzial, das über zwei Wellen mit den Portaltrieben und wiederum über zwei weitere Wellen mit den zugehörigen Radträgern verbunden ist; die Portalachse ist als mehrfach untersetzte Achse für Einzelradaufhängung ausgebildet.

## Beschreibung

Die vorliegende Erfindung betrifft eine Portalachse für Kraftfahrzeuge, insbesondere Omnibusse, mit zwei Portalgehäusen, mit einem Differenzial, das über zwei Wellen mit den zugehörigen Radträgern verbunden ist und mit einer Aufhängung zur Verbindung der Portalachse mit dem Fahrzeug.

Portalachsen für Omnibusse sind lange bekannt. Durch diese soll eine möglichst tiefliegende Ladefläche bzw. Flurhöhe unmittelbar zwischen den angetriebenen Rädern geschaffen werden. So beschreibt die DE-A 22 56 121 eine Achsanordnung für Omnibusse, bei welcher mittels Gelenkwellen das Differenzial einer Omnibusachse tiefer als die eigentlichen Radantriebswellen gelegt wird. Dadurch können den Rädern separate Untersetzungsgetriebe vorgeordnet werden.

Da es für Omnibusse im Stadtverkehr als optimal angesehen wird, wenn die Möglichkeit geschaffen wird, den Laufgang von normalspurigen Fahrgestellen auch zwischen den Rädern in gleicher Breite wie auf der gesamten Länge des Omnibusses in derjenigen Höhe über der Fahrbahn anzuordnen, welche mit maximal einer Trittstufe vom Gehweg aus erreichbar ist, wurde in der DE 30 27 806 der Anmelderin eine Triebachse mit um einen Portalabstand tiefer als die Radantriebswellen angeordneter Vorgelegewelle zwischen den beiderseitigen Stirnrad-Vorgelegegetrieben vorgeschlagen, die im wesentlichen aus einer in einem Portalachsgehäuse gelagerten Vorgelegewelle besteht, welche die beiden in unmittelbarer Nähe der Räder angeordneten Stirnrad-Vorgelegegetriebe miteinander verbindet und aus einem Kegelradgetriebe mit Differenzial besteht, dessen Abtriebskegelrad mit der Vorgelegewelle drehfest verbunden ist und dessen Antriebskegelrad über eine Kardanwelle mit dem Schaltgetriebe bzw. dem Antriebsmotor des Omnibusses verbunden ist; die beiden Stirnrad-Vorgelegegetriebe sind dabei als Doppel-Vorgelegegetriebe mit Leistungsverzweigung über zwei ständig mit dem Abtriebsrad in Eingriff stehende Zwischenräder ausgebildet, wobei eines der Stirnrad-Vorgelegegetriebe mit dem Kegelgetriebe und dem Differenzial in einem gemeinsamen Gehäuse zusammengefaßt ist und wobei beide Gehäuse Befestigungspunkte für die Fahrgestellabstützung aufweisen. Ferner sind beide Gehäuse durch ein im Bereich der Fahrzeugmitte die geringste Bauhöhe aufweisendes Achsgehäuse miteinander verbunden, in welchem eine Steckwelle als der längere Teil der Vorgelegewelle ungeteilt eingebaut ist.

Dadurch werden günstige Übersetzungsstufen, verbesserte Laufruhe und schmalere Zahnräder ermöglicht, wobei die Höhe des Portalabstandes auf die in der Praxis erforderliche Größenordnung für eine optimale Einstiegshöhe bei voller Laufgangbreite gebracht werden kann.

Aus der EP B 599 293 ist eine angetriebene Achsanordnung für Fahrzeuge bekannt, mit einem zentralen Gehäuse, mit Aufhängungselementen, die das zentrale Gehäuse mit dem Fahrzeug verbinden, mit einem Hauptantrieb, der im zentralen Gehäuse angeordnet ist und der eine Differenzialgetriebeeinheit aufweist, mit seitlichen Antrieben, die an den äußeren Enden des zentralen Gehäuses angeordnet sind, mit Radnabeneinheiten, die jeweils mit den seitlichen Antrieben verbunden sind, wobei ein Portalabstand zwischen einer Mittelachse, einer Differenzialgetriebeeinheit, die im zentralen Gehäuse angeordnet ist und einer Längsachse der Radnabeneinheiten vorgesehen ist, wobei die Aufhängungselemente, die das zentrale Gehäuse mit dem Fahrzeug verbinden an Gehäusen der seitlichen Antriebe in integrierter Weise befestigt sind und wobei die Gehäuse der seitlichen Antriebe, das zentrale Gehäuse und die Aufhängungselemente als eine kompakte Einheit ausgebildet sind, mit Aufhängungselementen, die im wesentlichen C-förmige Arme ebenso wie Verbindungspunkte zur Befestigung der Achsanordnung am Fahrzeug aufweisen.

Die Aufhängungselemente und die Gehäuse der seitlichen Antriebe sind also bei dieser bekannten Portalachse einstückig ausgebildet, wobei die im wesentlichen C-förmigen Arme aus einem geschlossenen Profil hergestellt werden, die an den Enden der Arme, die vom zentralen Gehäuse entfernt sind, Luftfedern und Stoßdämpfer tragende Dämfungselemente aufweisen.

Schließlich beschreibt die DE 196 04 730 der Anmelderin eine Portalachse für Niederflur-Stadtomnibusse, mit einem Ausgleichsgetriebe, dessen Achswellen jeweils in ein Antriebsritzel eines Portalgetriebes mit Untersetzungswirkung eingesteckt sind, das frei schwimmend und selbst zentrierend zwischen zwei Zwischenritzeln angebracht ist, die jeweils die halbe Antriebsleistung auf ein Stirnrad zum Radantrieb übertragen, wobei die Achswellen, bedingt durch die beiden Portaltriebe um die Portaltiefe niedriger liegen als die Radachsen. Um Scheibenbremsen in das Portalachssystem integrieren zu können, ohne dabei die Durchgangsbreite des Flurs im Fahrzeug im Bereich der Achse zu verringern und um bei verringerter Portaltiefe eine niedrige Flurhöhe zu erzielen, sind die Achswellen außermittig am oberen Rand des Innenraums des Achsbrückengehäuses angeordnet.

All diese bekannten Portalachsen für Omnibusse sind Starrachsen, welche ein hohes Eigengewicht aufweisen. Dies bedeutet, dass der Federungs- bzw. Dämpfungskomfort des Omnibusses negativ beeinflußt wird, da es sich hierbei um große ungefederte Massen handelt. Die starre Achsbrücke, die die beiden Portalgehäuse miteinander verbindet, ist einteilig ausgeführt, mit einem exzentrisch angeordneten Differenzial und dabei ortsfest mit den beiden Portalgehäusen verschraubt. Dadurch entsteht ferner ein großes ungenutztes Ölvolumen, wobei ein Austausch des Kegelradgetriebes zur Reparatur oder zur Anpassung der Übersetzung ohne einen Ausbau der gesamten Portalachse nicht möglich ist. Das seitlich angeordnete Differenzial führt ferner zu ungleichen Verdrehsteifigkeiten zwischen dem linken Radträger und dem rechten Radträger und damit zu einer permanenten Belastung des Differenzials.

Die vom Markt geforderte Variabilität der Fahrzeuggesamtbreite (zwischen 2,30 und 3,00 m) ist nur durch konstruktive Änderungen und Neuteile der Portalachse erreichbar, verbunden mit jeweils neuen durchzuführenden Berechnungen und Versuchen.

Aufgabe der vorliegenden Erfindung ist es, eine Portalachse mit Einzelradaufhängung für Kraftfahrzeuge und insbesondere Omnibusse zu schaffen, mit der die erforderliche Variabilität der Fahrzeuggesamtbreite erreichbar ist und mit der ein niedriger und stufenfreier Mittelgang ermöglicht wird, wie er insbesondere für Stadtbusse wünschenswert ist.

Ausgehend von einer Portalachse der eingangs näher genannten Art erfolgt die Lösung dieser Aufgabe mit dem im kennzeichnenden Teil des Anspruchs 1 angegebenen Merkmal; vorteilhafte Ausgestaltungen sind in den Unteransprüchen beschrieben.

Die Erfindung sieht also vor, dass die Portalachse als mehrfach untersetzte Achse für Einzelradaufhängung ausgebildet ist, die einen vertikalen Versatz (Offset) zwischen der Radträgermitte und der Differenzialmitte aufweist. Damit wird der für Stadtbusse wünschenswerte niedrige und stufenfreie Mittelgang ermöglicht.

Die Portalachse ist in zwei Abschnitte unterteilt, die über eine Gelenkwelle miteinander verbunden sind.

Das Kegelradgetriebe und das Differenzial sind direkt neben einem der Portalgehäuse angeordnet und ortsfest mit ihm verbunden; das Differenzial ist mit dem dem gegenüberliegenden Portalgehäuse zugeordneten Radträger über eine Gelenkwelle mit Längenausgleich verbunden.

Die erfindungsgemäße Portalachse besitzt also keine starre Verbindung mehr zwischen den beiden Portalgehäusen. Da die Drehmomentübertragung zu dem gegenüberliegenden Radträger mittels einer Gelenkwelle mit Längenausgleich erfolgt, kann die Portalachse in der Länge bedarfsweise und ohne Modifikationen an der Achskonstruktion der gewünschten Fahrzeugbreite angepaßt werden.

Ein weiterer Vorteil ist darin zu sehen, dass getrennte Ölhaushalte für die beiden Portalgehäuse vorgesehen werden (wobei eines aus der Kombination Portalgehäuse, Kegelradgetriebe und Differenzial besteht), wodurch eine geringere Ölmenge erforderlich ist (Einsparungspotential ca. 40 bis 50 %).

Die ungefederte Masse verringert sich, sodass bessere Fahreigenschaften erzielt werden. Das Kegelradgetriebe kann ohne Ausbau der gesamten Achse ausgewechselt werden. Gleiche Verdrehsteifigkeiten am linken und am rechten Radträger durch entsprechende Dimensionierung der Gelenkwelle sind einfach realisierbar; die Verdrehelastizität läßt sich um ca. 30 % reduzieren, sodass eine günstigere Driveline-Gestaltung möglich ist, da weniger Schwingungsneigung besteht. Schließlich wird noch der Vorteil einer größeren Bodenfreiheit im Mittenbereich der Portalachse erzielt.

Im folgenden wird die Erfindung anhand der Zeichnung näher erläutert:
Es zeigen:
- Fig. 1: schematisch eine Ansicht einer herkömmlichen Portalachse und
- Fig. 2: Ansicht einer erfindungsgemäßen Portalachse.

Derartige Portalachsen für Omnibusse sind dem Fachmann gut bekannt, sodass im folgenden nur die für das Verständnis der Erfindung notwendigen Bauteile beschrieben werden, die in der Zeichnung auch nur mit Bezugszeichen versehen sind.

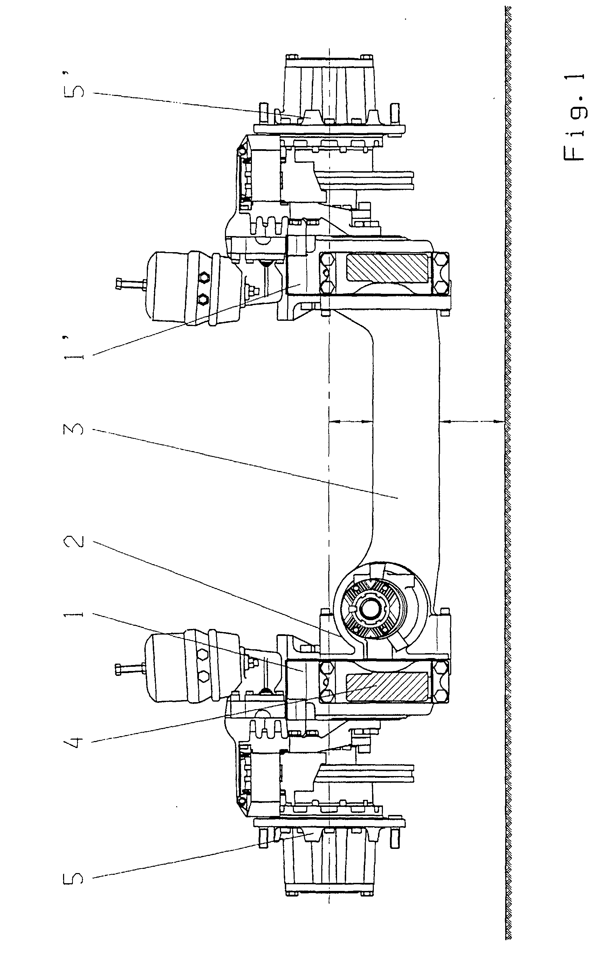

In Fig. 1 ist schematisch eine herkömmliche als Starrachse ausgebildete Portalachse dargestellt. Die beiden Portalgehäuse 1, 1' sind hierbei durch eine starre Achsbrücke 3 miteinander verbunden, d. h. dass die Portalachse einteilig ausgeführt ist und dadurch ein hohes Eigengewicht besitzt. Das Kegelradgetriebe inklusive Differenzial 2 ist exzentrisch angeordnet und mit dem Portalgehäuse 1 ortsfest verschraubt. Mit 4 ist die Luftfederaufhängung angedeutet und mit 5 ein Radträger.

Diese Starrachse weist ein großes ungenutztes Ölvolumen auf, wobei ein Austausch des Kegelradgetriebes inklusive Differenzial 2 zur Reparatur oder zur Anpassung der Übersetzung ohne Ausbau der gesamten Portalachse nicht möglich ist. Das seitlich angeordnete Differenzial 2 führt ferner zu ungleichen Verdrehsteifigkeiten zwischen dem linken Radträger 5 und dem rechten Radträger 5' und damit zu einer permanenten Belastung des Differenzials 2.

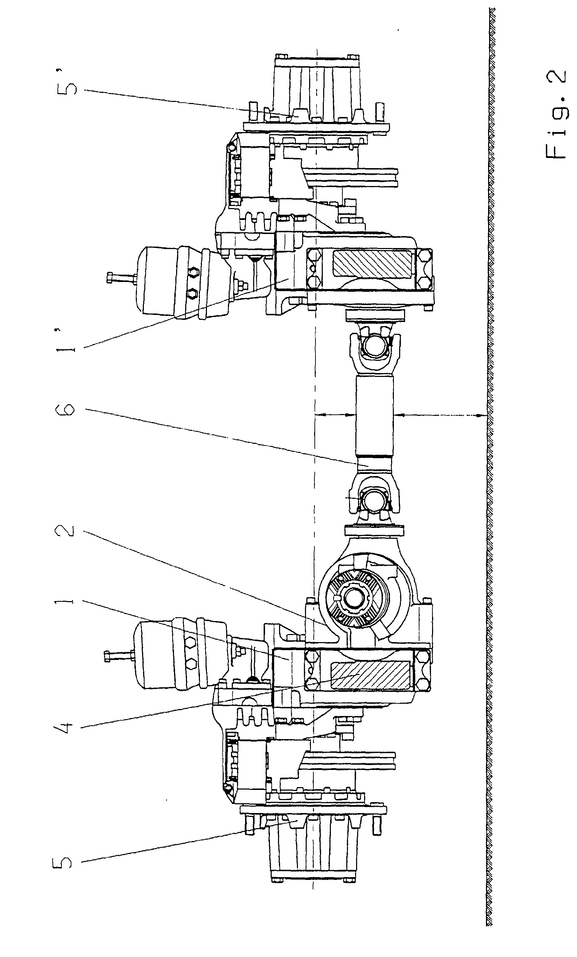

Fig. 2 zeigt nun die gleiche Ansicht einer erfindungsgemäßen Portalachse, die als angetriebene mehrfach untersetzte Achse für Einzelradaufhängung ausgebildet ist, mit einem vertikalen Versatz (Offset) zwischen Radnabenmitte und Differenzialmitte. Das Kegelradgetriebe inklusive Differenzial 2 ist hierbei ebenfalls ortsfest mit einem der beiden Portalgehäuse 1 verbunden, jedoch besteht keine starre Verbindung mehr zwischen dem linken Portalgehäuse 1 und dem rechten Portalgehäuse 1'. In dem Portalgehäuse 1 und 1' befindet sich der Portaltrieb, welcher mit dem Kegelradgetriebe inklusive Differenzial 2 in Verbindung steht. Die Drehmomentübertragung zu dem gegenüberliegenden Radträger 5' erfolgt mittels einer Gelenkwelle 6 mit Längenausgleich, welche in der Länge bedarfsweise und ohne Modifikationen an der Achskonstruktion der gewünschten Fahrzeugbreite problemlos angepaßt werden kann.

Es sind zwei getrennte Ölhaushalte vorgesehen, wobei der eine dem rechten Portalgehäuse 1' und der andere dem linken Portalgehäuse 1 zusammen mit dem darin befestigten Kegelradgetriebe inklusive Differenzial 2 zugeordnet ist.

Mit der erfindungsgemäßen Ausgestaltung der Portalachse für Einzelradaufhängung werden gleiche Verdrehsteifigkeiten am linken und rechten Radträger 5 bzw. 5' bei entsprechender Dimensionierung der Gelenkwelle 6 realisierbar (heute üblicher Wert: 1 : 1,85; erfindungsgemäß erzielbarer Wert: 1 : 1,08).

Die Verdrehelastizität läßt sich um ca. 30 % reduzieren, sodass eine günstigere Driveline-Gestaltung ermöglicht wird. Bei der Ölmenge kann eine Einsparung von 40 bis 50 % erzielt werden. Die Flexibilität bei der Wahl der Achsbreite ist insbesondere interessant im Hinblick auf die Einführung von sogenannten Super-Single-Reifen; eine größere Bodenfreiheit im Mittenbereich der Achse ist ebenfalls erreichbar. Werden die üblicherweise bei den herkömmlichen Portalachsen zwischen Oberkante Achsbrücke und dem Fahrzeugboden verlegten Rohrleitungen in den Bereich über der Gelenkwelle 6 angeordnet, entsteht gegenüber den herkömmlichen als Starrachse ausgebildeten Portalachsen eine Anhebung der möglichen Mittelganghöhe von ca. 17 mm, während die Bodenfreiheit gleichzeitig von derzeit ca. 165 mm auf ca. 253 mm zunimmt.

### Bezugszeichen

- 1: Portalgehäuse
- 2: Kegelradgetriebe inklusive Differenzial
- 3: Achsbrücke
- 4: Luftfederhängung
- 5: Radträger
- 6: Gelenkwelle

## Patentansprüche

1. Portalachse für Kraftfahrzeuge, insbesondere Omnibusse mit zwei Portalgehäusen (1), mit einem Kegelradgetriebe inklusive Differenzial (2), das über zwei Wellen mit den zugehörigen Portaltrieben verbunden ist und mit einer Aufhängung zur Verbindung der Portalachse mit dem Fahrzeug, **dadurch gekennzeichnet, dass** die Portalachse als mehrfach untersetzte Achse für Einzelradaufhängung ausgebildet ist.

2. Portalachse nach Anspruch 1, **dadurch gekennzeichnet, dass** sie in zwei Abschnitte unterteilt ist, die über eine Gelenkwelle (6) miteinander verbunden sind.

3. Portalachse nach einem der vorhergehenden Ansprüche, **dadurch gekennzeichnet, dass** das Differenzial (2) bei einem der Portalgehäuse (1) angeordnet und ortsfest mit ihm verbunden ist.

4. Portalachse nach einem der vorhergehenden Ansprüche, **dadurch gekennzeichnet, dass** zwischen der Radnabemitte und der Differenzialmitte ein vertikaler Versatz besteht.

5. Portalachse nach einem der vorhergehenden Ansprüche, **dadurch gekennzeichnet, dass** das Differenzial (2) mit dem dem gegenüberliegenden Portalgehäuse (1') zugeordneten Radträger (5') über eine Gelenkwelle (6) mit Längenausgleich verbunden ist.

6. Portalachse nach einem der vorhergehenden Ansprüche, **dadurch gekennzeichnet, dass** jedes Portalgehäuse (1, 1') mit einem eigenen Ölhaushalt versehen ist.
